Europäisches Patentamt

European Patent Office

Office européen des brevets

(19)

(11) **EP 1 051 822 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(21) Anmeldenummer: **99904701.2**

(22) Anmeldetag: **13.01.1999**

(51) Int Cl.7: **H04L 25/03**

(86) Internationale Anmeldenummer:
**PCT/DE1999/000045**

(87) Internationale Veröffentlichungsnummer:
**WO 1999/039482 (05.08.1999 Gazette 1999/31)**

(54) **ENTSCHEIDUNGSRÜCKGEKOPPELTER ENTZERRER MIT RAUSCHVORHERSAGEN**

DECISION FEEDBACK EQUALIZER WITH NOISE PREDICTION

EGALISATEUR A DECISION RETROACTIVE AVEC PREDICTION DE BRUIT

(84) Benannte Vertragsstaaten:
**DE FR GB IT**

(30) Priorität: **28.01.1998 DE 19803235**

(43) Veröffentlichungstag der Anmeldung:
**15.11.2000 Patentblatt 2000/46**

(73) Patentinhaber: **Infineon Technologies AG**
**81669 München (DE)**

(72) Erfinder: **SCHENK, Heinrich**
**D-81476 München (DE)**

(74) Vertreter: **Bickel, Michael et al**
**Westphal - Mussgnug & Partner**
**Patentanwälte**
**Mozartstrasse 8**
**80336 München (DE)**

(56) Entgegenhaltungen:
**EP-A- 0 707 401          US-A- 5 453 797**

• **CRESPO, HONIG: "Pole-zero decision feedback equalization for the digital subscriber loop" IEEE GLOBAL TELECOMMUNICATIONS CONFERENCE, 2. - 5. Dezember 1990, Seiten 1166-1171, XP000221013 New York, US**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft sowohl eine Vorrichtung als auch ein Verfahren zur Veränderung des Rauschverhaltens in einem Empfänger eines Datenübertragungssystems.

Es sind Vorrichtungen und Verfahren zur Verbesserung des Rauschverhaltens in Empfängern bekannt, die entweder einen Noise-Prediktor oder einen Noise-Attenuator verwenden. Mit dem Noise-Attenuator kann bei gleicher Koeffizientenanzahl ein besserer Signal-Rausch-Abstand als mit dem Noise-Prediktor erzielt werden. Wegen der rückgekoppelten Struktur müssen die Koeffizienten in Bezug auf Stabilität ständig überwacht werden. Dies ist sehr aufwendig und führt auch nicht immer zu dem gewünschten Erfolg.

Aus EP 0 707 401 A2 ist eine Vorrichtung bekannt, die einen Noise-Prediktor aufweist.

Der Erfindung liegt daher die Aufgabe zugrunde, eine Vorrichtung sowie ein Verfahren zur Veränderung des Rauschverhaltens in einem Empfänger eines Datenübertragungssystems anzugeben, die mit technisch einfachen Mitteln einen größeren bzw. besseren Störabstand ermöglichen.

Diese Aufgabe wird erfindungsgemäß gelöst durch eine Vorrichtung zur Veränderung des Rauschverhaltens in einem Emfpänger eines Datenübertragungssystems, mit einem Noise-Prediktor, der mit einem Noise-Attenuator verbunden ist, wobei der Noise-Attenuator fest dimensioniert ist, während Koeffizienten des Noise-Prediktors adaptiv auf die jeweilige Störung einstellbar sind.

Des weiteren wird diese Aufgabe erfindungsgemäß gelöst durch ein Verfahren zur Veränderung des Rauschverhaltens in einem Empfänger eines Datenübertragungssystems, der sowohl einen Noise-Prediktor als auch einen Noise-Attenuator enthält, wobei der Noise-Attenuator fest dimensioniert wird, während die Koeffizienten des Noise-Prediktors adaptiv auf die jeweilige Störung eingestellt werden.

Gemäß einer bevorzugten Ausführungsform der Erfindung ist der feste Noise-Attenuator ein System erster Ordnung mit der Übertragungsfunktion

$$NA(z) = \frac{a_1 + a_2 \cdot z^{-1}}{1 + b_2 \cdot z^{-1}},$$

wobei $a_i$ und $b_i$ die Koeffizienten des Noise-Attenuators sind. Aus Stabilitätsgründen sollte zunächst $|b_2| \leq 1$ sein. z beschreibt dagegen den komplexen z-Bereichs-Operator (z-Transformation). Definitionsgemäß gilt

$$z = e^{j2\pi\, f/fa},$$

wobei fa die Abtastfrequenz des zeitdikreten Systems bezeichnet.

Gemäß einer weiteren bevorzugten Ausführungsform ist der adaptive Noise-Prediktor ein System erster Ordnung mit der Übertragungsfunktion:

$$NP(z) = c_1 + c_2 \cdot z^{-1}$$

Bevorzugt ist der Noise-Attenuator rückgekoppelt angeschlossen, um die gewünschten Störabstände zu erzielen.

Obwohl eine Vielzahl von festen Koeffizienten für den Noise-Attenuator möglich ist, haben sich mindestens angenähert folgende als besonders vorteilhaft erwiesen:

$$a_1 = -\,7/8; \qquad a_2 = 0; \qquad b_2 = 0$$

oder

$$a_1 = -\,2; \qquad a_2 = 9/16; \qquad b_2 = 1/2.$$

Weitere Vorteile und Merkmale der Erfindung ergeben sich aus der folgenden Beschreibung zweier Ausführungsformen sowie aus den Figuren, auf die Bezug genommen wird. Es zeigen:

Figur 1    eine Schaltung für eine Vorrichtung gemäß einer ersten Ausführungsform;

Figur 2      eine Schaltung für eine Vorrichtung gemäß einer zweiten Ausführungsform;

Figur 3      eine prinzipielle Anordnung eines Datenübertragungssystems und spektrale Leistungsdichte des Rauschens am Empfänger-Eingang und am Eingang eines Entscheiders, wobei eine Störung durch Nebensprechen auftritt;

Figur 4      ein Blockschaltbild eines Empfängers mit einem Noise-Prediktor;

Figur 5      eine prinzipielle Anordnung eines Noise-Prediktors;

Figur 6      eine prinzipielle Anordnung eines Noise-Attenuators;

Figur 7      ein Schaubild bezüglich der erzielbaren Rauschreduzierung bei einem Einsatz eines Noise-Attenuators mit zwei Koeffizienten bei NEXT-Rauschen einer 5,5 km ABG 26 Leitung; und

Figur 8      eine kombinierte Noise-Attenuator/Noise-Prediktor-Anordnung.

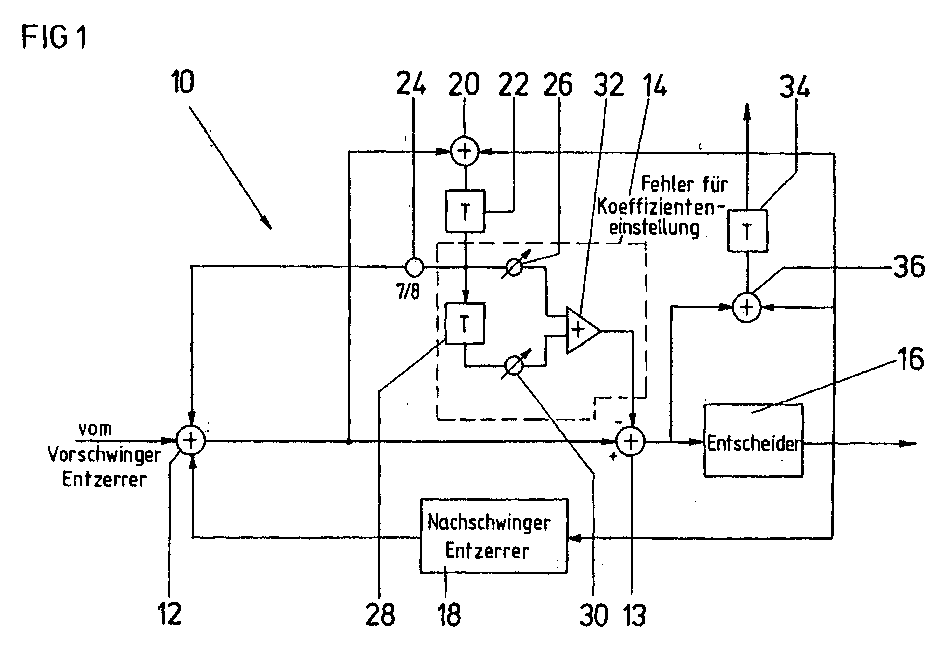

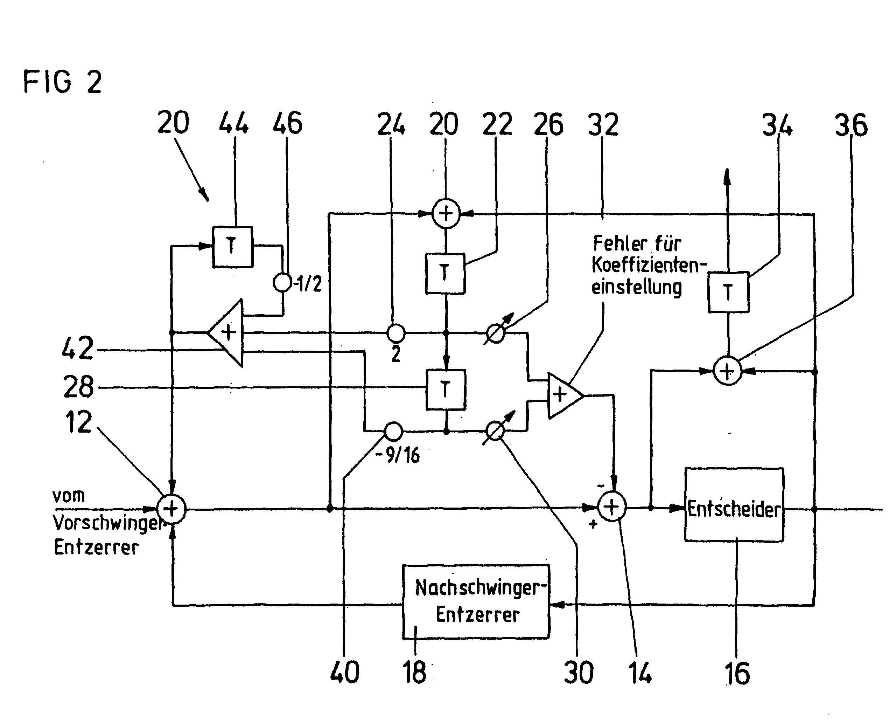

Für ein besseres Verständnis wird zunächst eine allgemeine Einführung bezüglich bisher verwendeter Noise-Prediktoren bzw. Noise-Attenuatoren gegeben, die für eine erfindungsgemäße Vorrichtung 10 (Fig.1) bzw. 20 (Fig.2) Verwendung finden.

Die detaillierte Schaltungsbeschreibung der Fig. 1 und Fig. 2 findet sich am Ende der Beschreibung.

Das Rauschverhalten eines Datenübertragungssystems kann durch Einsatz eines Noise-Prediktors verbessert werden. Dabei wird aus bereits empfangenen Rauschwerten an einem Entscheider-Eingang ein Schätzwert für den aktuell empfangenen Rauschwert berechnet. Dies ist jedoch nur möglich, wenn die Rauschwerte am Entscheider-Eingang miteinander korreliert sind.

Weißes Rauschen zeichnet sich dadurch aus, daß zwischen den einzelnen Rauschwerten keine statistischen Bindungen bestehen. Daraus ergibt sich, daß ein Noise-Prediktor nur dann sinnvoll einsetzbar ist, wenn kein weißes Rauschen vorliegt.

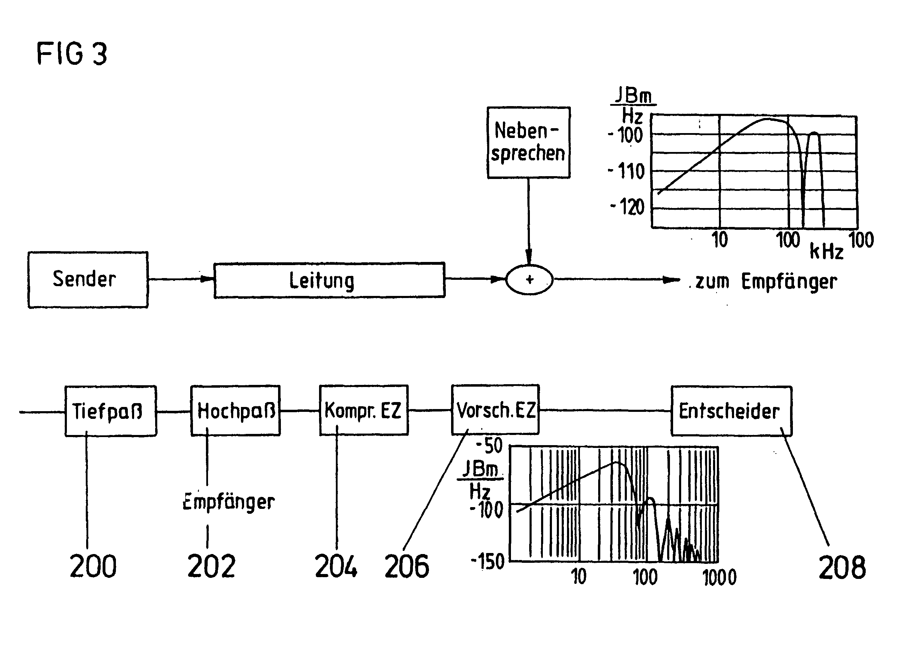

Es werden z.B. integrierte Bausteine betrachtet, die in Kupferleitungs-Datenübertragungssystemen, z.B. zur Realisierung der U-Schnittstelle in ISDN-Einrichtungen, betrachtet. Eine Kupferdoppelader weist einen mit der Frequenz ansteigenden Dämpfungsverlauf auf. Dieser muß im Empfänger mit Hilfe des linearen Entzerrers zumindest teilweise wieder ausgeglichen werden, wobei auch die spektrale Leistungsdichte des Rauschens mit zunehmender Frequenz angehoben wird. Die Nebensprechdämpfung eines Kabels sinkt mit steigender Frequenz, so daß das Spektrum der durch Nebensprechen verursachten Störungen entsprechend spektral geformt ist. Auch andersartige Störungen, insbesondere Einkopplungen schmalbandiger Signale, weisen spektral geformte Störspektren auf. Man kann daher davon ausgehen, daß im Empfänger am Entscheider-Eingang kein weißes sondern nur farbiges Rauschen anliegt. Dies-ist in der Fig.3 verdeutlicht.

Es wird nun eine durch Nahnebensprechen verursachte Störung am Empfänger-Eingang angenommen. Die spektrale Leistungsdichte dieser Störung ist gemäß dem in der ANSI Spezifikation T1.601 angegebenen Modell in Fig. 3 dargestellt. Diese Störung durchläuft die linearen Filterblöcke Empfangstiefpaß 200, Hochpaß 200, Kompromißentzerrer 204 und Vorschwingerentzerrer 206 des Empfängers. Die Nachschwinger-Verzerrungen werden mit Hilfe eines Nachschwingentzerrers (Decision Feedback Entzerrer) kompensiert, der jedoch die spektrale Leistungsdichte des Rauschens nicht beeinflußt. Er ist daher in Fig.3 nicht enthalten. Das Leistungsdichtespektrum des Rauschens am Entscheider Eingang ist in Fig.3 ebenfalls dargestellt. Dabei wird ein Vorschwingentzerrer für eine 5,5 km AWG 26 Leitung zugrundegelegt.

Wegen der starken Frequenzabhängigkeit des Rauschens am Eingang eines Entscheiders 208, der dem Vorschwingerentzerrer 206 nachgeschaltet ist, kann hier mit einer beträchtlichen Verbesserung des Rauschverhaltens bei Zwischenschaltung eines Noise- Prediktors gerechnet werden.

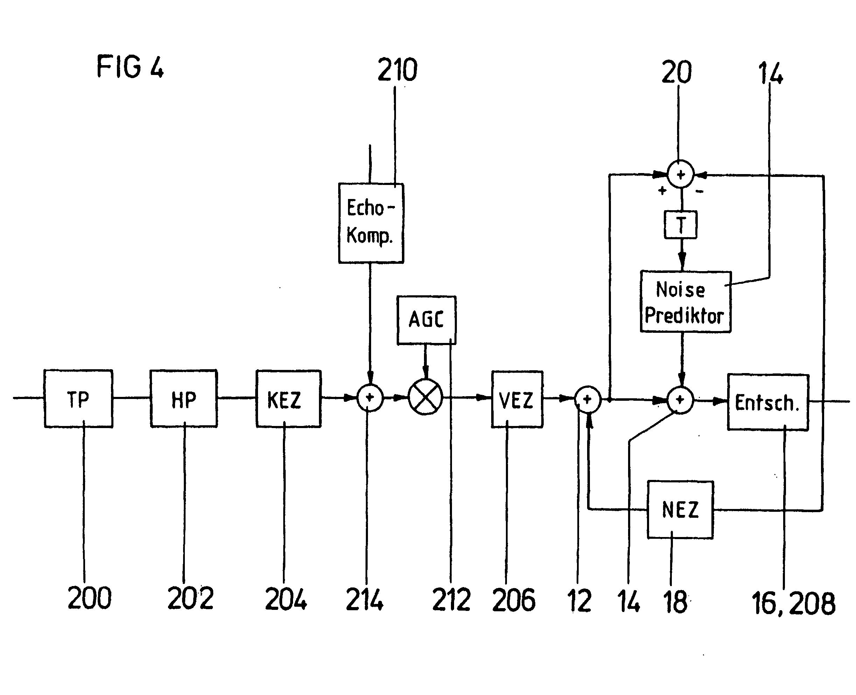

Bei Vernachlässigung von Entscheidungsfehlern können die empfangenen und am Entscheidereingang anliegenden Rausch-werte durch Differenzbildung aus dem entzerrten Signal und den entschiedenen Werten gewonnen werden. Die Fig.4 zeigt das Blockschaltbild eines Empfängers mit Noise Prediktor. Hierbei wird das am Empfänger-Eingang eingekoppelte Rauschen durch die Teilsysteme Tiefpaß 200, Hochpaß 202, Kompromißentzerrer 204 und Vorschwingentzerrer 206 spektral verformt. Ein Echokompensator 210 dient zur Löschung der vom eigenen Sender verursachten Echos und ein Regelverstärker AGC 212 sorgt für eine konstante von der Leitungslänge unabhängige Aussteuerung des Signals am Eingang der nachfolgenden Teilsysteme. Hierfür wird das Ausgangssignal des Echokompensators 210 mit dem Ausgangssignal des Kompromißentzerrers 204 in einer Addierstufe 214 addiert und dieses Signal in einer Multiplikationsstufe 216 mit dem AGC-Signal multipliziert. Dieses Signal gelangt dann in den Vorschwingerentzerrer 206. Das Ausgangssignal des Vorschwingentzerrers 206 wird erfindungsgemäß der bereits in den Fig. 1 oder 2 vorgestellten Schaltungsanordnung zugeführt. Dies bedeutet, daß das Ausgangssignal des Vorschwingentzerrers 206 an eine Addierstufe 12 gelangt, der das Ausgangssignal des Nachschwingentzerrers 18 ebenfalls zugeführt wird. Das Ausgangssignal der Addierstufe 12 wird zwei weiteren Addierstufen 14 und 20 zugeführt. Das Ausgangssignal der Addierstufe 14 gelangt an den Entscheider 16 bzw. 208. Am Ausgang des Entscheiders 16 bzw. 208 ist das rauschbefreite bzw. rauschreduzierte Signal abgreifbar. Dieses Signal wird sowohl dem Eingang des Nachschwingentzerrers 18 als auch einem Subtraktionseingang der Addierstufe 20 zugeführt. Dies bedeutet, daß das Ausgangssignal des Entscheiders 16 bzw. 208 vom Ausgangsignal der Addierstufe 12 abgezogen wird. Dieses Signal wird über die Verzögerungsstufe 22 dem Noise-Predikator 14 zugeführt, dessen Ausgang der Addierstufe 14 zugeführt wird. Bei Vernachlässigung der Eigenstörungen beeinflussen beide Blöcke die spektrale Formung des Rauschsignals nicht. Die Verzerrungen, verursacht durch die Impulsantwortwerte nach dem Hauptwert (Nachwinger) werden mit Hilfe des Nachschwingerentzerrers 18 kompensiert. Auch dieser beeinflußt das Rauschspektrum des am Entscheider 16; 208 anliegenden Rauschsignals nicht, wenn das Verhalten bei Fehlentscheidungen nicht berücksichtigt wird.

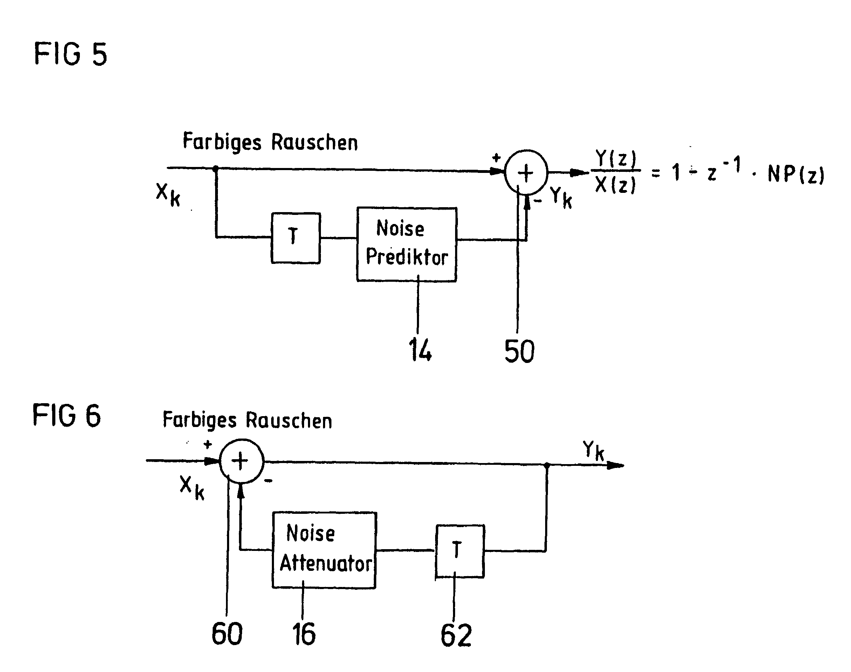

Es wird nun ein Noise-Prediktor 14 betrachtet, wie er üblicherweise zum Einsatz kommt. Die prinzipielle modellhafte Anordnung zeigt die Fig.5. Die Anordnung ist nicht rekursiv aufgebaut und verfügt über eine Addierstufe 50. Dieser Addierstufe wird das Signal $x_k$ zugeführt. Dieses Signal $x_k$ wird ebenfalls über einen Verzögerungsblock T einem Noise-Prediktor 14 zugeführt. Dessen Ausgang wird der Addierstufe 50 zugeführt um das Ausgangssignal des Noise-Prediktors vom Signal $x_k$ zu subtrahieren. Am Ausgang steht dann das Signal $y_k$ an.

Der Verzögerungsblock T berücksichtigt dabei die für den Entscheider benötigte Verarbeitungszeit. Es wird ein nichtrekursives System mit der Übertragungsfunktion

$$\mathrm{NP}(z) \;=\; \sum_{i=1}^{M} a_i \cdot z^{-i+1}$$

für den Noise Prediktor verwendet. Die Koeffezienten $a_i$ müssen dabei so gewählt werden, daß die Rauschleistung des Restrauschens (in Fig.5 das Signal $y_k$) minimal wird. Die Einstellung kann z.B. iterativ mit Hilfe des MSE (Mean Square Error)-Algorithmus erfolgen. Dabei lautet die Einstellvorschrift für die Koeffizienten

$$a_i(k+1) = a_i \cdot (k) + g \cdot x_{k-i+1} \cdot y_k$$

Die Stellgröße g beeinflußt das dynamische Verhalten des Noise Prediktors. In Verbindung mit der Aussteuerung der Signale x und y wird die Einschwingzeit durch die Wahl von g definiert. Bei konstantem g ist daher die Einschwingzeit von der Aussteuerung der Signale x und y bzw. von der Leistung des Rauschens abhängig. Ein von der Rauschleistung unabhängiges Einschwingverhalten erhält man, wenn anstelle der Größen $x_k$ bzw. $y_k$ nur deren Vorzeichen verwendet wird (sign-sign-Algorithmus).

Die Koeffizienten zur Minimierung der Rauschleistung des Signals $y_k$ lassen sich bei Kenntnis der Autokorrelationsfunktion des Rauschsignals $x_k$ bzw. dessen Leistungsdichtespektrum auch geschlossen berechnen. Es ergeben sich dabei die gleichen Werte wie bei der o.g. iterativen Koeffizienteneinstellung. Mit den optimalen Koeffizienten kann die Leistung des resultierenden Restrauschens ($y_k$) ermittelt werden.

Die für das in Fig.3 dargestellte Übertragungssystem erzielbaren Rauschleistungs reduzierungen sind für verschiedene Prädikatorlängen M in Tabelle 1 zusammengestellt. Unter Prädikatorlänge ist hierbei die Koeffizientenzahl des (nichtrekursiven) Noise-Prediktors zu verstehen.

Bedingt durch die starke Frequenzabhängigkeit des NEXT-Rauschens wird dieses Rauschen durch die linearen Empfänger Teilsysteme um mehr als 2 dB stärker verstärkt als weißes Rauschen. Andererseits ist der Rauschgewinn bedingt durch den Noise-Prediktor wegen der Farbigkeit des NEXT-Rauschens um über 2 dB höher, so daß sich beim Einsatz eines Noise-Prediktors in diesem Beispiel immer etwa die gleiche Rauschleistung nach dem Noise-Prediktor ergibt.

Tabelle 1:

| Rauschleistung am Entscheider Eingang mit und ohne Noise Prediktor für verschiedene Prediktorlängen, 5,5 km AWG 26 Leitung | | | | |
|---|---|---|---|---|
| **Rauschen am Empfänger-Eingang** | **Rauschleistung vor Entscheider ohne Noise Prediktor** | **Rauschleistung vor Entscheider mit Noise Prediktor** | | **Rauschleistungs-Reduzierung** |
| NEXT gemäß ANSI T1.601 | 20,0 dB | M=2 | 24,3 dB | 4,3 dB |
| | | M=3 | 24,8 dB | 4,8 dB |
| | | M=4 | 25,2 dB | 5,2 dB |
| Weißes Rauschen Leistung 0...320 kHz wie NEXT | 22,1 dB | M=2 | 24,3 dB | 2,2 dB |
| | | M=3 | 24,5 dB | 2,4 dB |
| | | M=4 | 24,6 dB | 2,5 dB |

Die am Entscheider wirksame Rauschleistung kann auch mit einer abgeänderten Anordnung reduziert werden. Hierbei werden vergangene am Entscheider wirksame Rauschwerte über ein Filternetzwerk bewertet und von dem aktuell anliegenden Rauschwert subtrahiert. Die prinzipielle Anordnung, die mit Noise Attenuator bezeichnet wird, zeigt die Fig.6. Die Anordnung verfügt über eine Addierstufe 60, der das Signal $x_k$ zugeführt wird. Die Addierstufe 60 subtrahiert ein Signal hiervon, das dem Ausgangssignal $y_k$ entspricht, welches durch einen Verzögerungsblock 62 mit nachfolgendem Noise-Attenuator 16 geführt ist.

Beim Einsatz eines nichtrekursiven Filters für den Noise Attenuator mit der Übertragungsfunktion

$$NP(z) \;=\; \sum_{i=l}^{M} a_1 \cdot z^{-i+1}$$

können die Koeffizienten ebenfalls iterativ mit Hilfe des LMS oder des sign-sign-Algorithumus eingestellt werden. Wegen der rückgekoppelten Struktur der Anordnung kann sich ein instabiles Systemverhalten ergeben, so daß eine Überwachung der Koeffizienten notwendig ist.

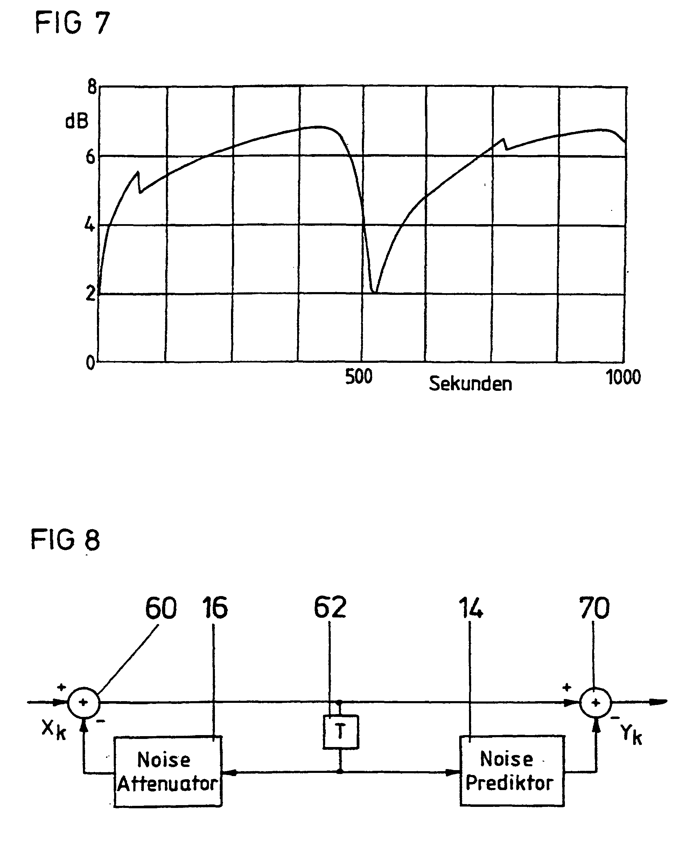

Die erzielbare Rauschunterdrückung kann jedoch größer als beim Noise Prediktor sein. Dies wird in Fig. 7 verdeutlicht. Es zeigt die Rauschredzierung für das in Fig.3 dargestellte Übertragungssystem beim Einsatz eines Noise Attenuators mit zwei Koeffizienten (M=2).

Hierbei wurden die Koeffizienten bezüglich Stabilität nicht überwacht, die Stellgröße für die Koeffizienteneinstellung nach dem MSE Algorithmus wurde jedoch sehr klein gewählt. Das zur Instabilität neigende Verhalten ohne Koeffizientenüberwachung ist deutlich zu erkennen. Die maximal erzielbare Rauschunterdrückung liegt in diesem Fall zwischen 6 und 7 dB, im Gegensatz zu 4,3 dB beim Einsatz eines Noise Prediktors.

Die bisherigen Ergebnisse haben gezeigt, daß mit dem Noise Attenuator zwar eine höhere Rauschreduzierung bei gegebener Filterlänge als mit dem Noise Prediktor erzielt werden kann, wegen des ungünstigen Stabilitätsverhaltens aber zum Einsatz in ein Übertragungssystem mit wechselnden Kanal- und Störeigenschaften wenig geeignet ist.

Es wird daher ein System betrachtet, das sowohl aus einem Noise Attenuator als auch aus einem Noise Prediktor besteht. Der Noise Attenuator wird dabei fest eingestellt, so daß sich kein instabiles Verhalten ergeben kann. Der Noise Prediktor kann in gewohnter Form iterativ eingestellt werden. Die sich ergebende Anordnung zeigt die Fig. 8. Die Anordnung entspricht zunächst der Anordnung von Fig. 6, d. h., es ist die Addierstufe 60, der Verzögerungsblock 62 und der Noise-Attenuator 16 vorgesehen. Die Anordnung ist jedoch um eine weitere Addierstufe 70 und einen Noise-Prediktor 14 ergänzt. Die Addierstufe 70 und der Noise-Prediktor 14 sind so verschaltet, daß das Ausgangssignal der Addierstufe 60 der Addierstufe 70 als Eingangssignal zugeführt wird. Der Ausgang des Verzögerungsblocks 62 wird auch an den Eingang des Noise-Prediktors 14 geführt. Der Ausgang des Noise-Prediktors 14 wird vom Ausgangssignal der Addierstufe 60 in der Addierstufe 70 subtrahiert. Das Ausgangssignal der Addierstufe 70 ist das Ausgangssignal $y_k$.

Für den Noise-Attenuator 16 kann hier auch ein rekursives digitales Filter mit festen Koeffizienten gewählt werden. Nach Festlegung der Koeffizienten lassen sich die optimalen Koeffizienten des adaptiven Noise-Prediktors 14 in geschlossener Form berechnen und damit läßt sich die maximal erzielbare Rauschreduzierung ermittelt.

Im folgenden wird ein fester Noise-Attenuator 14 erster Ordnung mit der Übertragungsfunktion

$$NA(z) = \frac{a_1 + a_2 \cdot z^{-1}}{1 + b_2 \cdot z^{-1}}$$

gewählt. Zur Vermeidung von "echten" Multiplikationen und damit zur Reduzierung des Realisierungsaufwands können die Koeffizienten so gewählt werden, daß sie durch sehr wenige Shift und Additions- bzw. Subtraktionsoperationen darstellbar sind. Als adaptiver Noise-Prediktor 14 wird ein System erster Ordnung mit der Übertragungsfunktion

$$NP(z) = c_1 + c_2 \cdot z^{-1}$$

verwendet.

Für das bisher in den Beispielen verwendet NEXT-Rauschen bzw. einem leistungsmäßig äquivalenten weißen Rauschen und einer 5,5 km langen AWG 26 Leitung werden die maximal erzielbaren Rauschreduzierungen für verschiedene Noise Attenuator-Dimensionierungen in der Tabelle 2 gegenübergestellt.

Es zeigt sich, daß die Polstellen des rückgekoppelten Noise Attenuator-Systems, die die Stabilität des Übertragungssystems bestimmen, die erzielbare Rauschreduzierung beeinflussen. Ziel muß es sein, eine möglichst hohe Rauschreduzierung zu erzielen bei möglichst kleinem Betrag der Polstellen, d.h. bei möglichst großem Abstand vom Stabilitätsrand $|z| = 1$. Die Beträge der Polstellen des rückgekoppelten Noise Attenuators sind in der Tabelle 2 mit angegeben.

Tabelle 2:

| Maximaler Rauschleistungsgewinn bei Verwendung eines festen Noise Attenuators in Verbindung mit einem adaptiven Noise Prediktor mit zwei Koeffizienten bei NEXT und bei weißem Rauschen, 5,5 km AWG 26 Leitung (nr. =nichtrekursiv, rek. = rekursiv, NA = Noise Attenuator) | | | | | | | |
|---|---|---|---|---|---|---|---|
| **Noise Attenuator** | | | **Polstelle des rückgekoppelten Systems** | **NEXT** | **Gewinn durch NA** | **weißes Rauschen** | **Gewinn durch NA** | **Bemerkungen** |
| 0 | 0 | 0 | 0 | 4,25 dB | 0 | 2,19 dB | 0 | ohne NA |
| -5/4 | 3/8 | 0 | 0.75 / 0.50 | 6,04 dB | 1,79 dB | 2,81 dB | 0,62 dB | nr. NA |
| -7/8 | 0 | 0 | 0.875 / 0.0 | 6,11 dB | 1,86 dB | 2,97 dB | 0,78 dB | nr. NA |
| -2 | 9/16 | 1/2 | 0.75 / 0.75 | 6,36 dB | 2,11 dB | 2,92 dB | 0,73 dB | rek.NA |
| -7/4 | 5/16 | 1/2 | 0  0.9045/0.3455 | 6,41 dB | 2,16 dB | 3,01 dB | 0,82 dB | rek.NA |

Wie Tabelle 2 zu entnehmen ist, kann durch Einsatz eines festen Noise Attenuators das Rauschverhalten bei NEXT um weitere 2 dB und bei weißem Rauschen um etwa 0.75 im Vergleich zu einem System mit einem reinen Noise Prediktor mit zwei Koeffizienten verbessert werden. Unter Berücksichtigung von erreichbarer Rauschunterdrückung, Realisierungsaufwand und Stabilitätsverhalten (Abstand vom Stabilitätsrand des rückgekoppelten Systems) kann ein fester Noise Attenuator mit den Koeffizienten

$$a_1 = -7/8; \qquad a_2 = 0; \qquad b_2 = 0$$

oder

$$a_1 = -2; \qquad a_2 = 9/16; \qquad b_2 = \tfrac{1}{2}$$

verwandt werden.

Die Fig.1 zeigt das Blockschaltbild des adaptiven Noise Prediktörs einschließlich dem festen Noise Attenuators gemäß einer ersten Ausführungsform innerhalb des Empfängers. Im Vergleich zum herkömmlichen Noise Prediktors ist lediglich eine Bewertung des Fehlers mit 7/8 (realisierbar durch 1-1/8) und eine zusätzliche Addition erforderlich.

Im einzelnen ist die Schaltungsanordnung von Fig. 1 folgendermaßen aufgebaut. Das Signal vom Vorschwinger-Entzerrer gelangt aus eine Addierstufe 12, die zwei weitere Eingänge hat. Der Ausgang der Addierstufe 12 wird zwei weiteren Addierstufen 13 und 20 zugeführt. Der Ausgang der Addierstufe 13 wird dem Eingang eines Entscheiders 16 zugeführt. Am Ausgang des Entscheiders 16 ist das Ausgangssignal der Anordnung abgreifbar. Das Ausgangssignal am Entscheider wird über den Nachschwinger-Entzerrer 18 auf die Addierstufe 12 rückgekoppelt. Das Ausgangssignal des Entscheiders 16 wird auch der Addierstufe 20 zugeführt. Der Ausgang der Addierstufe 20 wird über einen Verzögerungsblock 20 einer Bewertungsstufe 24 mit dem Faktor 7/8 zugeführt. Der Ausgang der Bewertungsstufe 24 wird der Addierstufe 12 zugeführt. Der Verbindungspunkt zwischen Verzögerungsblock 22 und Bewertungsstufe 24 wird einem variablen Bewertungsblock 26 zugeführt, dessen Ausgangssignal einem Komparator 32 angelegt ist. Der Verbindungspunkt zwischen Verzögerungsblock 22 und Bewertungsstufe 24 wird darüber hinaus über einen weiteren Verzögerungsblock 28 mit nachgeschalteter variabler Bewertungsstufe 30 einem anderen Eingang des Komparators 32 zugeführt. Der Ausgang des Komparators 32 wird der Addierstufe 13 derart zugeführt, daß dessen Signal von dem Ausgangssignal der Addierstufe 12 subtrahiert wird. Die Schaltungskomponenten 26, 28, 30 und 32 bilden einen Noise-Prediktor 14.

Zur Bewertung eines Fehlers für die Koeffizienteneinstellung ist die Anordnung von Fig. 1 noch mit einer weiteren Addierstufe 36 mit nachgeschaltetem Verzögerungsblock erweitert. Der Addierstufe 36 wird hierfür das Ausgangssignal des Entscheiders 16 und dessen Eingangssignal zugeführt. Am Ausgang des Verzögerungsblockes 34 ist der Fehler abgreifbar.

In Fig.2 ist das Blockschaltbild für eine zweite Ausführungsform dargestellt. Mit dem etwas erhöhten Realisierungsaufwand ist bei einer NEXT-Einspeisung gemäß Tabelle 2 eine um etwa 0.25 dB bessere Rauschunterdrückung möglich.

Die Schaltungsanordnung von Fig. 2 entspricht weitgehend derjenigen von Fig. 1, ist jedoch in folgender Weise erweitert. Es ist ein weiterer Komparator 43 vorgesehen. Dieser Komparator verfügt über drei Eingänge. Der erste Eingang ist über eine Bewertungsstufe 40 mit dem Ausgang des Verzögerungsblocks 28 in Verbindung. Dieser Bewertungsblock 40 enthält einen Bewertungsfaktor von -9/16. Ein zweiter Eingang des Komparators 43 ist über die bereits erläuterte Bewertungsstufe 24 mit dem Ausgang des Verzögerungsblocks 22 in Verbindung. Der Bewertungsfaktor beträgt jetzt jedoch 2. Der dritte Eingang des Komparators 43 ist über eine weitere Bewertungsstufe 46 mit vorgeschaltetem Verzögerungsblock 44 mit dem Ausgang des Komparators 43 in Verbindung. Der Bewertungsfaktor in der Bewertungsstufe 46 beträgt -1/2. Der Ausgang des Komparators 43 ist darüber hinaus mit einem Eingang der Addierstufe 12 in Verbindung.

**Patentansprüche**

1.  Vorrichtung (10; 20) zur Veränderung des Rauschverhaltens in einem Empfänger (12) eines Datenübertragungssystems mit einem Noise-Prediktor (14),
    **dadurch gekennzeichnet dass** das Datenübertragungssystem einen Noise-Attenuator (16) aufweist, der mit dem Noise-Prediktor (14) verbunden ist, wobei der Noise-Attenuator (16) fesc dimensioniert ist, während Koeffizienten des Noise-Prediktors (14) adaptiv auf die jeweilige Störung einstellbar sind.

2.  Vorrichtung nach Anspruch 1,
    **dadurch gekennzeichnet, daß** der Noise-Attenuator (16) ein System erster Ordnung ist mit der Übertragungsfunktion:

$$NA(z) = \frac{a_1 + a_2 \cdot z^{-1}}{1 + b_2 \cdot z^{-1}}$$

3.  Vorrichtung nach Anspruch 1 oder 2,
    **dadurch gekennzeichnet, daß** der adaptive Noise-Prediktor (14) ein System erster Ordnung ist mit der Übertragungsfunktion:

$$NP(z) = c_1 + c_2 \cdot z^{-1}$$

**4.** Vorrichtung nach mindestens einem der vorstehenden Ansprüche 1 bis 3, **dadurch gekennzeichnet, daß** der Noise-Attenuator (16) rückgekoppelt angeschlossen ist.

**5.** Vorrichtung nach mindestens einem der vorstehenden Ansprüche 1 bis 4, **gekennzeichnet durch** folgende feste Koeffizienten für den Noise-Attenuator (16):

$$a_1 = -7/8; \qquad a_2 = 0; \qquad b_2 = 0$$

oder

$$a_1 = -2; \qquad a_2 = 9/16; \qquad b_2 = 1/2.$$

**6.** Verfahren zur Veränderung des Rauschverhaltens in einem Empfänger (12) eines Datenübertragungssystems mit einem Noise-Prediktor (14), **dadurch gekennzeichnet, dass** das Datenübertragungssystem auch einen Noise-Attenuator (16) enthält, wobei der Noise-Attenuator (16) fest dimensioniert wird, während die Koeffizienten des Noise-Prediktors (14) adaptiv auf die jeweilige Störung eingestellt werden.

**7.** Verfahren nach Anspruch 6, **dadurch gekennzeichnet, daß** der Noise-Attenuator (16) ein System erster Ordnung ist mit der Übertragungsfunktion:

$$NA(z) = \frac{a_1 + a_2 \cdot z^{-1}}{1 + b_2 \cdot z^{-1}}$$

**8.** Verfahren nach Anspruch 6 oder 7, **dadurch gekennzeichnet, daß** der adaptive Noise-Prediktor (14) ein System erster Ordnung ist mit der Übertragungsfunktion:

$$NP(z) = c_1 + c_2 \cdot z^{-1}$$

**9.** Verfahren nach einem der vorstehenden Ansprüche 6 bis 8, **dadurch gekennzeichnet, daß** der Noise-Attenuator (16) rückgekoppelt ist.

**10.** Verfahren nach einem der vorstehenden Ansprüche 6 bis 9, **gekennzeichnet durch** folgende feste Koeffizienten für den Noise-Attenuator (16):

$$a_1 = -7/8; \qquad a_2 = 0; \qquad b_2 = 0$$

oder

$$a_1 = -2; \qquad a_2 = 9/16; \qquad b_2 = 1/2.$$

**Claims**

**1.** Device (10; 20) for changing the noise characteristic in a receiver (12) of a data transmission system comprising a noise predictor (14), **characterized in that** the data transmission system has a noise attenuator (16) which is connected to the noise predictor (14), wherein the design of the noise attenuator (16) is fixed, while coefficients of the noise predictor (14) can be adaptively matched to the respective interference.

2. Device according to Claim 1, **characterized in that** the noise attenuator (16) is a first-order system having the following transfer function:

$$NA(z) = \frac{a_1 + a_2 \cdot z^{-1}}{1 + b_2 \cdot z^{-1}}.$$

3. Device according to Claim 1 or 2, **characterized in that** the adaptive noise predictor (14) is a first-order system having the following transfer function:

$$NP(z) = c_1 + c_2 \cdot z^{-1}.$$

4. Device according to at least one of the preceding Claims 1 to 3, **characterized in that** the noise attenuator (16) is connected with feedback.

5. Device according to at least one of the preceding Claims 1 to 4, **characterized by** the following fixed coefficients for the noise attenuator (16):

$$a_1 = -7/8; a_2 = 0; \qquad b_2 = 0$$

or

$$a_1 = -2; a_2 = 9/16; \qquad b_2 = 1/2.$$

6. Method for changing the noise characteristic in a receiver (12) of a data transmission system comprising a noise predictor (14), **characterized in that** the data transmission system also contains a noise attenuator (16), wherein the design of the noise attenuator (16) is fixed, while the coefficients of the noise predictor (14) are adaptively matched to the respective interference.

7. Method according to Claim 6, **characterized in that** the noise attenuator (16) is a first-order system having the following transfer function:

$$NA(z) = \frac{a_1 + a_2 \cdot z^{-1}}{1 + b_2 \cdot z^{-1}}.$$

8. Method according to Claim 6 or 7, **characterized in that** the adaptive noise predictor (14) is a first-order system having the following transfer function:

$$NP(z) = c_1 + c_2 \cdot z^{-1}.$$

9. Method according to one of the preceding Claims 6 to 8, **characterized in that** the noise attenuator (16) has feedback.

10. Method according to one of the preceding Claims 6 to 9, **characterized by** the following fixed coefficients for the noise attenuator (16):

$$a_1 = -7/8; a_2 = 0; \qquad b_2 = 0$$

or

$$a_1 = -2; a_2 = 9/16; \qquad b_2 = 1/2.$$

**Revendications**

1. Dispositif (10 ; 20) destiné à modifier le comportement de bruit dans un récepteur (12) d'un système de transmission de données équipé d'un prédicteur de bruit (14),
   **caractérisé en ce que**
   le système de transmission de données présente un atténuateur de bruit (16) relié au prédicteur de bruit (14), l'atténuateur de bruit (16) étant de dimensions fixes alors que des coefficients du prédicteur de bruit (14) peuvent être réglés sur le parasite concerné de façon adaptative.

2. Dispositif selon la revendication 1,
   **caractérisé en ce que**
   l'atténuateur de bruit (16) est un système du premier ordre possédant la fonction transfert :

$$NA\,(z) = \frac{a_1 + a_2 \cdot z^{-1}}{1 + b_2 \cdot z^{-1}}$$

3. Dispositif selon la revendication 1 ou 2,
   **caractérisé en ce que**
   le prédicteur de bruit adaptatif (14) est un système du premier ordre possédant la fonction de transfert :

$$NP\,(z) = c_1 + c_2 \cdot z^{-1}$$

4. Dispositif selon au moins une des revendications précédentes 1 à 3,
   **caractérisé en ce que**
   l'atténuateur de bruit (16) est rétrocouplé.

5. Dispositif selon une des revendications 1 à 4,
   **caractérisé par**
   les coefficients fixes suivants pour l'atténuateur de bruit (16) :

$$a_1 = -7/8; \qquad a_2 = 0; \qquad b_2 = 0$$

   ou

$$a_1 = -2; \qquad a_2 = 9/16; \qquad b_2 = 1/2$$

6. Procédé pour modifier le comportement de bruit dans un récepteur (12) d'un système de transmission de données comprenant un prédicteur de bruit (14),
   **caractérisé en ce que**
   le système de transmission de données présente un atténuateur de bruit (16), l'atténuateur de bruit (16) étant de dimensions fixes alors que des coefficients du prédicteur de bruit (14) peuvent être réglés sur le parasite concerné de façon adaptative.

7. Procédé selon la revendication 6,
   **caractérisé en ce que**
   l'atténuateur de bruit (16) est un système du premier ordre possédant la fonction de transfert :

$$NA\,(z) = \frac{a_1 + a_2 \cdot z^{-1}}{1 + b_2 \cdot z^{-1}}$$

8. Procédé selon la revendication 6 ou 7,
**caractérisé en ce que**
le prédicteur de bruit adaptatif (14) est un système du premier ordre comportant la fonction de transfert :

$$NP(z) = c_1 + c_2\, z^{-1}$$

9. Procédé selon au moins une des revendications précédentes 6 à 8,
**caractérisé en ce que**
l'atténuateur de bruit (16) est rétrocouplé.

10. Procédé selon une des revendications précédentes 6 à 9,
**caractérisé par** les coefficients fixes suivants pour l'atténuateur de bruit (16) :

$$a_1 = -7/8\,; \qquad a_2 = 0\,; \qquad b_2 = 0$$

ou

$$a_1 = -2\,; \qquad a_2 = 9/16\,; \qquad b_2 = \tfrac{1}{2}$$

FIG 1

**FIG 2**

EP 1 051 822 B1

FIG 3

$\frac{JBm}{Hz}$

-100
-110
-120

100 kHz

Neben–sprechen

+

zum Empfänger

Leitung

Sender

Entscheider — 208

$\frac{JBm}{Hz}$
-50
-100
-150

10   100   1000

Vorsch. EZ

Kompr. EZ — 204

Hochpaß

Empfänger — 202

Tiefpaß — 200

206

FIG 4

210

20   14

Echo-
Komp.

T

Noise
Prediktor

AGC

TP    HP    KEZ    +    ⊗    VEZ    +    +    Entsch.

NEZ

200    202    204    214    212    206    12    14    18    16, 208

EP 1 051 822 B1

# FIG 5

Farbiges Rauschen

$X_k$

T

Noise Prediktor

14

50

$\dfrac{Y(z)}{X(z)} = 1 - z^{-1} \cdot NP(z)$

$Y_k$

# FIG 6

Farbiges Rauschen

$X_k$

$Y_k$

Noise Attenuator

T

60

16

62

EP 1 051 822 B1

## FIG 7

## FIG 8